# EUROPÄISCHE PATENTSCHRIFT

(11) **EP 1 012 790 B1**
(45) Veröffentlichungstag und Bekanntmachung des Hinweises auf die Patenterteilung: **30.10.2002**
(21) Anmeldenummer: 98950238.0
(22) Anmeldetag: 11.09.1998
(51) Int. Cl.: G06T 11/00, G06T 17/00

(54) **VERFAHREN ZUR AUFNAHME UND ZUR ABSPEICHERUNG OPTISCH ERFASSBARER DATEN**
METHOD FOR RECEIVING AND STORING OPTICALLY DETECTABLE DATA
PROCEDE D'ENREGISTREMENT ET DE MEMORISATION DE DONNEES DETECTEES PAR VOIE OPTIQUE

(30) Priorität: 11.09.1997 DE 19740038
(43) Veröffentlichungstag der Anmeldung: 28.06.2000
(73) Patentinhaber: Müller, Markus R., 8053 Zürich (CH)
(72) Erfinder: Müller, Markus R., 8053 Zürich (CH)
(74) Vertreter: Lucht, Silvia
(86) Internationale Anmeldenummer: IB9801516
(87) Internationale Veröffentlichungsnummer: WO99013431

(56) Entgegenhaltungen:
- WO-A-97/25690
- KANG S B ET AL: "3-D SCENE DATA RECOVERY USING OMNIDIRECTIONAL MULTIBASELINE STEREO" PROC. OF THE IEEE COMP. SOC. CONF. ON COMPUTE VISION AND PATTERN RECOGNITION, SAN FRANCISCO, JUNE 18 - 20, 1996, Seiten 364-370, XP000640255 IEEE
- MCMILLAN L ET AL: "PLENOPTIC MODELING: AN IMAGE-BASED RENDERING SYSTEM" COMPUTER GRAPHICS PROCEEDINGS, LOS ANGELES, AUG. 6 - 11, 1995, Seiten 39-46, XP000546214
- PANKAJ DANI ET AL: "AUTOMATED ASSEMBLING OF IMAGES: IMAGE MONTAGE PREPARATION" PATTERN RECOGNITION, Bd. 28, Nr. 3, März 1995, Seiten 431-445, XP000494937

## Beschreibung

### Stand der Technik

Die Erfindung geht aus von einem Verfahren zur Aufnahme und Abspeicherung der optisch erfaßbaren Daten eines Objektes auf einem Speichermedium nach dem Oberbegriff des Anspruchs 1.

Derartige Verfahren finden in unterschiedlichen Wellenlängenbereichen Anwendung, beispielsweise im Bereich infraroter oder ultravioletter Strahlung, des sichtbaren Lichtes oder der Wärmestrahlung. Je nach Wellenlängenbereich werden entsprechende Kameras und die hierzu notwendige Optik eingesetzt. Das interessierende Objekt wird entweder als Ganzes oder in einzelnen Ausschnitten aufgenommen. Jede der einzelnen Aufnahmen hat eine gewisse Größe. Aufgrund der Einstellung der optischen Komponenten der Kamera und des räumlichen Abstandes zwischen dem Objekt und der Kamera weist die Aufnahme scharfe und weniger scharfe Bereiche auf. Eine in allen Bereichen scharf abgebildete Aufnahme kann nicht erreicht werden, da jeweils nur die im Fokus der verwendeten Optik liegenden Teile des Objektes scharf abgebildet sind. Der Fokus ist räumlich begrenzt und meist kleiner als das Objekt. Ist das Objekt zudem dreidimensional, können mit Hilfe einer Aufnahme nicht alle Bereiche der Oberfläche oder der unmittelbar unter der Oberfläche liegenden Schichten scharf abgebildet werden. Als nachteilig erweist sich außerdem, daß die Blende der Kamera nicht weit geöffnet werden kann und damit die Helligkeit der Aufnahme gering ist, da eine weit geöffnete Blende die Schärfentiefe verkleinern würde und damit nur ein entsprechend kleiner Teil des Objektes scharf abgebildet werden könnte.

Aus dem Stand der Technik (DE 39 31 934 C2, DE 39 05 619 A1) ist eine Bild-Eingabe- und Ausgabevorrichtung bekannt, bei der eine Fokussiereinrichtung vorgesehen ist. Mittels dieser Fokussiereinrichtung werden die optischen Komponenten der Bildeingabevorrichtung auf mehrere unterschiedliche Objektebenen scharf eingestellt. Zur Aufnahme von Bildinformationen werden von einem Objekt mehrere Bilder bei unterschiedlichen Einstellung der optischen Komponenten aufgenommen und die daraus erhaltenen Informationen zusammengesetzt. Hierzu sind numerische Verfahren notwendig. Als nachteilig erweist sich bei dieser bekannten Vorrichtung, daß die veränderbare Einstellung der optischen Komponenten eine Mechanik erfordert, die mit hoher Genauigkeit die optischen Komponenten verschiebt. Diese Mechanik ist aufwendig in der Herstellung und anfällig gegen Beschädigungen, Verschleiß und Beeinträchtigungen bei der Benutzung. Außerdem kann das Zusammenfügen der Informationen wegen der unterschiedlichen optischen Einstellungen nur mit hohem Aufwand erreicht werden, da sich bei jeder Aufnahme aufgrund der Veränderung der optischen Komponenten der Maßstab ändert.

Demgegenüber hat das erfindungsgemäße Verfahren zur Aufnahme und Abspeicherung der optisch erfaßbaren Daten eines Objektes den Vorteil, daß mit einer Kamera eine Sequenz von mehreren Einzelaufnahmen des Objektes unter verschiedenen räumlichen Einstellungen bezüglich der relativen Position zwischen Objekt und Kamera aufgenommen wird. Die Einstellung der optischen Komponenten und der daraus resultierende Fokus bleiben hierbei unverändert. Dadurch läßt sich das Verfahren einfacher anwenden als das aus dem Stand der Technik bekannte Verfahren. Eine Mechnik zur präzisen Veränderung der optischen Komponenten ist nicht notwendig. Aufgrund dessen ist das Verfahren in seiner Anwendung kostengünstiger als bekannte Verfahren und in seiner Durchführung weniger anfällig gegen Beeinträchtigungen, Störungen oder Verschleiß.

Die scharf abgebildeten Bereiche der Einzelaufnahmen werden ermittelt und zu einem oder mehreren Resultatbildern zusammengesetzt. Da die optischen Komponenten bei den verschiedenen Einzelaufnahmen unverändert sind, ändert sich der Maßstab nicht. Dies führt dazu, daß beim Zusammenfügen der Einzelaufnahmen eine Anpassung hinsichtlich des Maßstabs unterbleibt. Das Zusammensetzen der Informationen ist daher weniger aufwendig als bei bekannten Verfahren.

Das Verfahren kann sowohl zur Aufnahme einzelner Abbilder von Objekten als auch zur Aufnahme von Filmen dienen. Das Verfahren kann von Hand durch Ausschneiden und Zusammenfügen der scharfen Bereiche oder mittels Blenden durchgeführt werden, es eignet sich jedoch insbesondere zur Durchführung mit Hilfe eines Computers. Bei zweidimensionalen Objekten oder bei Objekten, bei denen ein zweidimensionales Resultatbild genügt, kann es ausreichend sein, die scharfen Bereiche zu einem einzigen Resultatbild zusammenzusetzen. Bei dreidimensionalen Objekten können die scharfen Bereiche verschiedener Ebenen des Objektes zu einem oder mehreren Resultatbildern zusammengesetzt werden. Letzteres hat den Vorteil, daß verschiedene Merkmale in unterschiedlichen Resultatbildern dargestellt sind. Dadurch wird die Bearbeitung der Bilder erleichtert, insbesondere zur Wiedererkennung der Merkmale. Es können auch zu den verschiedenen Eindringtiefen der verwendeten Strahlung in das Objekt unterschiedliche Resultatbilder zusammengestellt werden. Vorteilhafterweise können die Einzelaufnahmen auch bei großer Blendenöffnung des Objektivs der Kamera aufgenommen werden. Hierbei werden trotz der großen Blendenöffnung scharfe Resultatbilder erzielt. Die Lichtempfindlichkeit der Aufnahmen wird hierbei erhöht. Die Kamera muß nicht für jede Einzelaufnahme scharf eingestellt werden, da die scharfen Bilder elektronisch ausgewählt und gespeichert werden und die unscharfen Bilder nicht gespeichert werden. Auch das Bewegen des Objektes während der Aufnahme führt zu einem scharfen Resultatbild. Die Anzahl der je Objekt aufgenommenen Einzelaufnahmen ist von der betreffenden Anwendung abhängig. In der Regel werden etwa 20 Einzelaufnahmen ausreichend sein. In besonderen Fällen können es jedoch auch weit mehr sein, beispielsweise mehr als 100 Einzelaufnahmen oder weniger, beispielsweise 5 Einzelaufnahmen. Die Belichtungszeit wird in Abhängigkeit von Objekt und Kamera gewählt. Sie hängt ab von der Anzahl der gewünschten Einzelaufnahmen je Sekunde oder Minute. Manche Arten von Kameras, wie beispielsweise CCD-Kameras. erlauben eine elektronische Verkürzung der Belichtungszeit.

Bei den aufgenommenen Objekten kann es sich um Gegestände wie beispielsweise Maschinen, Bauteile, Kunstwerke, Schmuckstüche oder sonstige Wertgegenstände oder auch um Personen oder Tiere handeln. Zur Erkennung oder Identifikation von Personen oder Tieren, insbesondere Zuchttiere, werden biometrische oder anatomische Merkmale herangezogen und in den Einzelaufnahmen aufgenommen Sowohl absichtliche als auch unabsichtliche Bewegungen des Objekts können zur Gewinnung von Informationen verwendet werden. Parallelverschiebungen oder Drehungen senkrecht zur optischen Achse werden benutzt, um mit der Kamera eine höhere Auflösung zu erhalten. Die höhere Auflösung kann auch durch Berechnungen erreicht werden. Parallelverschiebungen des Objekts senkrecht zur optischen Achse können auch zur Erzielung von stereoskopischen oder dreidimensionalen Resultatbildern ausgewertet werden, auch wenn nur eine Kamera zur Aufnahme einer Sequenz von Einzelaufnahmen verwendet wird. Hierbei wird ausgenutzt, daß bestimmte Bereiche des aufgenommenen Objekts in aufeinanderfolgenden Einzelaufnahmen hinsichtlich ihrer Schärfe kontinuierlich verändert abgebildet werden. Auf diese Weise können auch Informationen über die Topografie und die Oberflächengestaltung eines Objekts erhalten werden.

Anhand einer Sequenz von mehreren Aufnahmen in vorgegebenen Zeitabständen können auch dynamische Vorgänge des Objekts ermittelt werden. Das Verfahren erlaubt damit auch zeitaufgelöste Untersuchungen des Objektes. So kann die Bewegung eines Objektes verfolgt und aufgenommen werden. Diese aufgenommene. Bewegung kann beispielsweise zur Erkennung oder Identifierzierung des Objekts oder zur Steuerung bestimmter Vorgänge herangezogen werden. So können zum Beispiel fehlerhafte Teile in einem Produktionsprozeß erkannt oder Personen identifiziert werden. Absichtliche Bewegungen einer Person können zusätzliche Informationen liefern.

Die beschränkte Schärfentiefe kann dazu verwendet werden, Merkmale unter der Oberfläche des Objektes zu erfassen, abzubilden und auszuwerten.

Das erfindungsgemäße Verfahren ermöglicht die Verwendung einer großen Blendenöffnung. Hierbei wird dennoch eine bestimmte Abbildungsschärfe erreicht.

Nach einer vorteilhaften Ausgestaltung der Erfindung werden die Einzelaufnahmen in einem Rechner abgespeichert und die scharf abgebildeten Bereiche der Einzelaufnahme mit Hilfe numerischer Methoden durch den Rechner ermittelt. Das Zusammensetzen der Resultatbilder erfolgt ebenfalls mit Hilfe des Rechners. Hierzu wird eine geeignete Software verwendet. Diese bestimmt auch die Grenzen der scharfen Abbildungsbereiche. Beim Zusammensetzen des Resultatbildes können auch die aus der Informationstheorie und den Signalerkennungsverfahren bekannten Erkenntnisse des Trelly-Verfahrens verwendet werden. Die Einzelaufnahmen werden beispielsweise im RAM oder auf der Harddisc des Computers zwischengespeichert. Die Sequenz der Einzelaufnahmen wird nur solange benötigt, bis ein Resultatbild erzeugt ist. Danach wird die Sequenz der Einzelaufnahmen gelöscht.

Es sind verschiedene Methoden zur Erzeugung eines Resultatbildes möglich. Bei einer ersten Methode werden n Einzelbilder mit Hochpaß gefiltert und die scharfen Bereiche kopiert. Die Übergangsfrequenz des Filters wird dabei auf die Schärfentiefenbereiche abgestimmt. Das Filter kann auch aus verschiedenen Filtern zusammengesetzt sein. Als numerische Methoden können hierfür beispielsweise Fourier-Transformationen, Wavelet-Transformationen, digitale Filter, Differenzial- oder Differenzbildung, Bessel-, Butterworthoder Gauss-Filter eingesetzt werden. Neben den scharf abgebildeten Bereichen der Einzelbilder können auch weitere Informationen ausgewertet werden, so beispielsweise die Vergrößerung bzw. Verkleinerung der Abbildung gegenüber der Fokusebene in der Nachbarschaft auf beiden Seiten der Fokusebene. Das Zusammensetzen der scharf abgebildeten Bereiche der Einzelbilder geschieht beispielsweise mit Hilfe bekannter numerischer Verfahren. Je nach Form des Objektes und seiner Obertlächengestaltung sowie der Anzahl der interessierenden Schichttiefen oder Merkmalsarten werden ein oder mehrere Resultatbilder zusammengesetzt.

Bei einer zweiten Methode wird im Vergleich zur ersten Methode zusätzlich die Topologie bzw. Morphologie charakteristischer Merkmale des Objektes berücksichtigt. Handelt es sich beispielsweise bei dem aufzunehmenden Objekt um einen Finger, so können mit dieser Methode unterschiedliche Hautschichten und Drüsen, wie beispielsweise die Papillarschicht oder Schweiß- und Talgdrüsen ausgewertet werden. Hierbei kann berücksichtigt werden, daß die Papillarlinien weitgehend zusammenhängend sind und an der Oberfläche verlaufen.

Bei einer dritten Methode werden mit Hilfe numerischer Funktionen aus der Sequenz der Einzelaufnahmen dreidimensionale Resultatbilder erzeugt. Diese können später im Computer gedreht, gekippt, geneigt oder beliebig bewegt werden, so daß der Benutzer auf dem Bildschirm mehrere Ansichten des Objektes betrachten kann. Diese Methode eignet sich insbesondere auch dann, wenn die mit dem erfindungsgemäßen Verfahren aufgenommenen Daten in einem später aufgenommenen Datensatz wiedererkannt werden sollen. Eine Verdrehung oder Verschiebung des Objektes im ersten Datensatz relativ zum zweiten Datensatz kann numerisch korrigiert und kompensiert werden, so daß eine Wiedererkennung trotzdem möglich ist.

Nach einer weiteren vorteilhaften Ausgestaltung der Erfindung werden die scharf abgebildeten Bereiche durch numerisches Bilden der Ableitung ermittelt. Die Ableitung ist in beiden Dimensionen der zweidimensionalen Einzelaufnahmen zu bilden. An den scharf abgebildeten Stellen ist die Ableitung maximal bzw. minimal. Die scharf abgebildeten Bereiche können auch bei Verwendung geeigneter Filter durch Vergleich der mit unterschiedlichem Filter aufgenommenen Bilder gewonnen werden.

Nach einer weiteren vorteilhaften Ausgestaltung der Erfindung werden die Parameter zur Aufnahme der Sequenz der Einzelaufnahmen durch einen Rechner vorgegeben und der Ablauf der Aufnahme von diesem Rechner gesteuert.

Nach einer weiteren vorteilhaften Ausgestaltung der Erfindung wird die Aufnahme der Sequenz von Einzelaufnahmen automatisch gestartet. So kann beispielsweise die Aufnahme zu einer festen Zeit oder bei einer bestimmten Position des Objektes gestartet werden. Die Aufnahme kann auch gestartet werden, wenn ein die Einzelaufnahmen verarbeitender Computer scharf abgebildete Bereiche erkennt.

Nach einer weiteren vorteilhaften Ausgestaltung der Erfindung wird die Aufnahme der Sequenz von Einzelaufnahmen durch eine Lichtschranke gestartet. Dies eignet sich insbesondere dann, wenn das Objekt während der Aufnahme auf die Kamera zu- und von der Kamera wegbewegt wird. Die Aufnahme wird dann automatisch gestartet, wenn sich das Objekt bis auf einen vorgegebenen Abstand an die Kamera angenähert hat.

Nach einer weiteren vorteilhaften Ausgestaltung der Erfindung werden die Einzelaufnahmen in fest vorgegebenen Zeitabständen aufgenommen. So kann die Kamera beispielsweise 25 Einzelaufnahmen als Bilder oder 50 Einzelaufnahmen als Halbbilder pro Sekunde aufnehmen, welche in den Speicher des Computers übertragen werden. Dies gilt für den Fall eines CCIR-Standards. Bei anderen Standards ergeben sich entsprechend andere Werte. Nicht alle Einzelaufnahmen müssen abgespeichert werden. Der zeitliche Beginn der Aufnahme und der Beginn der Abspeicherung im Computer können unterschiedlich sein. Grundsätzlich sind die Aufnahme der Sequenz der Einzelaufnahmen und deren Abspeicherung im Computer voneinander entkoppelte Vorgänge.

Nach einer weiteren vorteilhaften Ausgestaltung der Erfindung werden die Einzelaufnahmen in fest vorgegebenen relativen Abständen zwischen Kamera und Objekt aufgenommen. Dies kann beispielsweise durch entsprechend angeordnete Lichtschranken erreicht werden.

Nach einer weiteren vorteilhaften Ausgestaltung der Erfindung wird als Kamera zur Aufnahme der Sequenz von Einzelaufnahmen eine CCD-Kamera verwendet. Anstelle einer CCD-Kamera kann auch eine Zeilenkamera oder ein Scanner verwendet werden.

Nach einer weiteren vorteilhaften Ausgestaltung der Erfindung werden zunächst alle Einzelaufnahmen der Sequenz auf dem Rechner abgespeichert. Nach Abschluß der Aufnahme der Sequenz werden die scharf abgebildeten Bereiche der Einzelaufnahmen ermittelt und zu einem Resultatbild zusammengesetzt.

Nach einer weiteren vorteilhaften Ausgestaltung der Erfindung werden aus jeder Einzelaufnahme der Sequenz unmittelbar nach deren Aufnahme die scharfen Bereiche ermittelt und in das Resultatbild eingefügt. Die Einzelaufnahmen werden nicht abgespeichert. Sofern der Prozessor des Rechners schnell genug arbeitet, können das Ermitteln der scharfen Bereiche und das Einfügen in das Resultatbild in Echtzeit ablaufen. Ist dies nicht der Fall, so müssen die Daten der Einzelaufnahmen zwischengespeichert werden. Werden aus den Einzelaufnahmen mehrere Resultatbilder erzeugt, so kann das Zusammensetzen der einzelnen Resultatbilder nach verschiedenen Methoden erfolgen. Um das Aufnehmen der Daten und Abspeichern im Rechner zusätzlich zu beschleunigen, können für die Zusammensetzung eines oder mehrerer Resultatbilder mehrere Prozessoren verwendet werden. Das Zusammenarbeiten der Prozessoren kann unter verschiedenen Gesichtspunkten organisiert sein. Zum einen können die numerischen Berechnungen der oben geschilderten Methoden 1 bis 3 in so viele Abschnitte unterteilt werden, wie gleichzeitig ablaufen können. Jeder Abschnitt wird von einem unterschiedlichen Prozessor bearbeitet. Die Synchronisation der Prozessoren erfolgt durch Input bzw. Output bzw. durch das Prozeßende pro Abschnitt. Die Daten werden weitergereicht oder es wird ein RAM mit mehr als einem Zugriffspfad verwendet (multiported RAM). Die Zusammensetzung mehrerer Resultatbilder kann teilweise parallelisiert werden. So können bereits beim Annähern des Objektes an die Kamera alle Resultatbilder entstehen. Sofern dies nicht möglich ist, werden die fehlenden Resultatbilder anschließend berechnet. Es entstehen Gittermuster mit allen ausgelesenen oder berechneten Informationen.

Nach einer weiteren vorteilhaften Ausgestaltung der Erfindung werden aus der Sequenz von Einzelaufnahmen mehrere Resultatbilder zusammengestellt, wobei in den Resultatbildern jeweils unterschiedliche Bereiche des Objekts dargestellt sind.

Nach einer weiteren vorteilhaften Ausgestaltung der Erfindung wird die Bildebene in mehrere Bereiche unterteilt und die Bereiche werden parallel bearbeitet. Dieses Vorgehen eignet sich insbesondere dann, wenn mehrere Prozessoren für die Bearbeitung zur Verfügung stehen. Bei den Bereichen kann es sich um Quadrate, Rechtecke, Kreise, Ovale oder andere Formen handeln. Diese können nebeneinander liegen oder sich gegenseitig überlappen.

Nach einer weiteren vorteilhaften Ausgestaltung der Erfindung wird das Verfahren zur Erkennung der Merkmale eines Fingers, insbesondere der Fingerspitze, eingesetzt. Zur Aufnahme der Daten wird der Finger an eine Kamera angenähert. Bereits beim Annähern wird die Aufnahme der Sequenz von Einzelaufnahmen gestartet. Auch beim Entfernen des Fingers von der Kamera können noch Einzelaufnahmen aufgenommen werden. Zur Wiedererkennung werden besonders charakteristische Merkmale der Fingerspitze aus dem Resultatbild ermittelt und bei einer erneuten Aufnahme des Fingers gesucht. Besonders charakteristische Merkmale einer Fingerspitze sind die Schweiß- und Talgdrüsen sowie die Papillarschicht, welche die Oberflächenform der Lederhaut und teilweise auch die der Oberhaut bestimmt. Die Papillen sind auch die Grundlage der Hautleisten. Papillarschicht, Schweiß- und Talgdrüsen sowie die Öffnungen der Drüsen an der Hautoberfläche können in unterschiedlichen Resultatbildern aufgenommen sein. Dies erleichert die Wiedererkennung. Mithilfe des erfindungsgemäßen Verfahrens kann auch festgestellt werden, ob der Finger durchblutet ist. Bei Durchleuchtung des Fingers mit einer Infrarotlichtquelle können anhand einer Sequenz von Einzelaufnahmen Helligkeitsschwankungen in Abhängigkeit des Herzpulses der Person aufgenommen werden. Darüber hinaus bewirkt die Durchblutung des Fingers eine periodische Verschiebung der Gefäßzellen des Fingers, die mit Hilfe des erfindungsgemäßen Verfahrens festgestellt werden kann.

Nach einer weiteren vorteilhaften Ausgestaltung der Erfindung wird das Objekt mit einer Lichtquelle beleuchtet.

Nach einer weiteren vorteilhaften Ausgestaltung der Erfindung wird eine gepulste Lichtquelle verwendet. die mit der Kamera synchronisiert ist. Das Objekt wird immer nur dann beleuchtet, wenn eine Einzelaufnahme gemacht wird.

Nach einer weiteren vorteilhaften Ausgestaltung der Erfindung wird das Objekt durch mehrere Lichtquellen unterschiedlichen Wellenlängenbereichs und in unterschiedlichen Anordnungen beleuchtet. Es können unterschiedliche Beleuchtungsarten verwendet werden. Durch die verschiedenen räumlichen Anordnungen ergeben sich unterschiedliche Einfallswinkel des Lichts. Auf diese Weise lassen sich unterschiedliche räumliche, geometrische oder perspektivische Einzelaufnahmen erreichen. Als Lichtquellen können beispielsweise Blitzröhren mit unterschiedlichen optischen Filtern verwendet werden.

Durch die Filter wird mithilfe einer Lichtquellen elektromagnetische Strahlung unterschiedlicher Wellenlängenbereiche erreicht.

Nach einer weiteren vorteilhaften Ausgestaltung der Erfindung wird das Objekt solange beleuchtet, wie es sich auf die Kamera zu und von der Kamera weg bewegt. In diesem Zeitintervall werden auch Einzelaufnahmen gemacht. Auf diese Weise erhält man Einzelaufnahmen in unterschiedlicher Distanz zur Kamera und damit in unterschiedlicher Schärfentiefe.

Nach einer weiteren vorteilhaften Ausgestaltung der Erfindung werden lediglich die im Fokus der Kamera liegenden Bereiche des Objektes beleuchtet. Dies ist möglich, da sich der Fokus der Kamera zwischen dem Aufnehmen der Einzelaufnahmen nicht ändert. Die Auswertung und das Zusammenfügen der Einzelaufnahmen wird erleichtert, da von den unscharfen Bereichen in den Einzelaufnahmen keine Informationen vorliegen.

Zur Durchführung des erfindungsgemäßen Verfahrens wird vorteilhafterweise eine Vorrichtung verwendet, bei der ein Rechner, eine Kamera und eine Steuerungsvorrichtung vorgesehen sind.

Weitere Vorteile und vorteilhafte Ausgestaltungen der Erfindung sind den Ansprüchen entnehmbar.

## Patentansprüche

1. Verfahren zur Aufnahme und zur Abspeicherung der optisch erfaßbaren Daten eines Objektes auf einem Speichermedium **dadurch gekennzeichnet,**
**daß** mit einer Kamera eine Sequenz von mehreren Einzelaufnahmen des Objektes unter verschiedenen räumlichen Einstellungen bezüglich der relativen Position zwischen Objekt und Kamera gemacht werden, ohne daß die Einstellung der optischen Komponenten und der daraus resultierende Fokus verändert wird,
**daß** die scharf abgebildeten Bereiche der Einzelaufnahmen ermittelt werden, und
**daß** die scharf abgebildeten Bereiche aller Einzelaufnahmen zu einem oder mehreren Resultatbildern zusammengesetzt werden.

2. Verfahren nach Anspruch 1, **dadurch gekennzeichnet, daß** die Einzelaufnahmen in einem Rechner abgespeichert werden, daß die scharf abgebildeten Bereiche der Einzelaufnahmen mithilfe numerischer Methoden durch den Rechner ermittelt werden und daß die Resultatbilder mithilfe des Rechners zusammengesetzt werden.

3. Verfahren nach Anspruch 2, **dadurch gekennzeichnet, daß** die scharf abgebildeten Bereiche durch numerisches Bilden der Ableitung ermittelt werden.

4. Verfahren nach Anspruch 1, 2 oder 3, **dadurch gekennzeichnet, daß** die Parameter zur Aufnahme der Sequenz von Einzelaufnahmen durch einen Rechner vorgegeben werden, und daß der Ablauf der Aufnahme von diesem Rechner gesteuert wird.

5. Verfahren nach einem der vorhergehenden Ansprüche, **dadurch gekennzeichnet, daß** die Aufnahme der Sequenz von Einzelaufnahmen automatisch gestartet wird.

6. Verfahren nach Anspruch 5, dadruch gekennzeichnet, daß die Aufnahme der Sequenz von Einzelaufnahmen durch eine Lichtschranke gestartet wird.

7. Verfahren nach einem der vorhergehenden Ansprüche, **dadurch gekennzeichnet, daß** die Einzelaufnahmen in fest vorgegebenen Zeitabständen aufgenommen werden.

8. Verfahren nach einem der vorhergehenden Ansprüche, **dadurch gekennzeichnet, daß** die Einzelaufnahmen in fest vorgegebenen relativen Abständen zwischen Kamera und Objekt aufgenommen werden.

9. Verfahren nach einem der vorhergehenden Ansprüche, **dadurch gekennzeichnet, daß** als Kamera zur Aufnahme der Sequenz von Einzelaufnahmen eine CCD-Kamera verwendet wird.

10. Verfahren nach einem der vorhergehenden Ansprüche, **dadurch gekennzeichnet, daß** zunächst alle Einzelaufnahmen der Sequenz auf dem Rechner abgespeichert werden und daß nach Abschluß der Aufnahme der Sequenz aus den Einzelaufnahmen die scharf abgebildeten Bereiche ermittelt werden.

11. Verfahren nach einem der vorhergehenden Ansprüche, **dadurch gekennzeichnet, daß** aus jeder Einzelaufnahme der Sequenz unmittelbar nach deren Aufnahme die scharfen Bereiche ermittelt und in das Resultatbild eingefügt werden.

12. Verfahren nach einem der vorhergehenden Ansprüche, **dadurch gekennzeichnet, daß** aus der Sequenz von Einzelaufnahmen mehrere Resultatbilder zusammengestellt werden, wobei in den Resultatbildern jeweils unterschiedliche Bereiche des Objekts oder unterschiedliche Merkmale dargestellt sind.

13. Verfahren nach einem der vorhergehenden Ansprüche, **dadurch gekennzeichnet, daß** die Bildebene in mehrere Bereiche unterteilt wird, und daß die Bereiche parallel bearbeitet werden.

14. Verfahren nach einem der vorhergehenden Ansprüche, **dadurch gekennzeichnet, daß** es zur Erkennung der Merkmale eines Fingers eingesetzt wird.

15. Verfahren nach einem der vorhergehenden Ansprüche, **dadurch gekennzeichnet, daß** das Objekt mit einer Lichtquelle beleuchtet wird.

16. Verfahren nach Anspruch 15, daurch gekennzeichnet, daß eine gepulste Lichtquelle verwendet wird, die mit der Kamera synchronisiert ist.

17. Verfahren nach Anspruch 15 oder 16, **dadurch gekennzeichnet, daß** das Objekt durch mehrere Lichtquellen unterschiedlichen Wellenlängenbereichs und in unterschiedlichen Anordnungen beleuchtet wird.

18. Verfahren nach einem der Ansprüche 15 bis 17, **dadurch gekennzeichnet, daß** das Objekt solange beleuchtet wird, wie es sich auf die Kamera zu und von der Kamera weg bewegt.

19. Verfahren nach einem er Ansprüche 15 bis 18, **dadurch gekennzeichnet, daß** lediglich die im Fokus der Kamera liegenden Bereiche des Objektes beleuchtet werden.

## Claims

1. Method for receiving and storing the optically detectable data of an object on a storage medium, **characterised in that**
a sequence of several individual photographs of the object is performed with a camera under various spatial settings in respect of the relative position between the object and the camera, without the setting of the optical components and
the resulting focus being altered,
the sharply defined areas of the individual photographs are determined,
the sharply defined areas of all individual photographs are compiled into one or more resulting images.

2. Method according to Claim 1, **characterised in that** the individual photographs are stored in a computer, that the sharply defined areas of the individual photographs are determined by the computer by means of numerical methods and that the resulting images are compiled by means of the computer.

3. Method according to Claim 2, **characterised in that** the sharply defined areas are determined by the numeric forming of the derivation.

4. Method according to Claims 1, 2 or 3, **characterised in that** the parameters for recording the sequence of individual photographs is prescribed by a computer, and that the process of recording is controlled by this computer.

5. Method according to one of the previous Claims, **characterised in that** the recording of the sequence of individual photographs is started automatically.

6. Method according to Claim 5, **characterised in that** the recording of the sequence of individual photographs is started by a light barrier.

7. Method according to one of the previous Claims, **characterised in that** the individual photographs are recorded at prescribed intervals of time.

8. Method according to one of the previous Claims, **characterised in that** the individual photographs are recorded at prescribed relative distances between the camera and the object.

9. Method according to one of the previous Claims, **characterised in that** a CCD camera is used as the camera for recording the sequence of individual photographs.

10. Method according to one of the previous Claims, **characterised in that** initially all individual photographs of the sequence are stored on the computer and that the sharply defined areas from the individual photographs are determined after completion of the recording of the sequence.

11. Method according to one of the previous Claims, **characterised in that** the sharp areas from each individual photograph of the sequence are determined immediately after the latter are recorded and are added to the resulting image.

12. Method according to one of the previous Claims, **characterised in that** several resulting images are compiled from the sequence of individual photographs, whereby different areas of the object or different features are illustrated in the resulting images.

13. Method according to one of the previous Claims, **characterised in that** the image plane is divided into several areas and that the areas are processed in parallel.

14. Method according to one of the previous Claims, **characterised in that** it is employed to identify the features of a finger.

15. Method according to one of the previous Claims, **characterised in that** the object is illuminated with a source of light.

16. Method according to Claim 15, **characterised in that** a pulsed light source which is synchronised with the camera is used.

17. Method according to Claim 15 or 16, **characterised in that** the object is illuminated by several light sources of different wavelength ranges and in different configurations.

18. Method according to one of Claims 15 to 17, **characterised in that** the object is illuminated for as long as it is moving towards the camera and away from the camera.

19. Method according to one of Claims 15 to 18, **characterised in that** only areas of the object lying in the focus of the camera are illuminated.

## Revendications

1. Procédé pour l'enregistrement et la mémorisation des données, pouvant être saisies par voie optique, d'un objet sur un support d'enregistrement, **caractérisé**
**en ce qu'**on fait avec une caméra une séquence de plusieurs prises de vue individuelles de l'objet avec différents réglages dans l'espace en ce qui concerne la position relative entre l'objet et la caméra, sans que le réglage des composants optiques et le point focal en résultant ne soit modifié,
**en ce que** les zones reproduites de façon nette des prises de vue individuelles sont calculées, et
**en ce que** les zones reproduites de façon nette de toutes les prises de vue individuelles sont assemblées pour avoir une image ou plusieurs images finales.

2. Procédé selon la revendication 1, **caractérisé en ce que** les prises de vue individuelles sont mémorisées dans un ordinateur, **en ce que** les zones reproduites de façon nette des prises de vue individuelles sont déterminées par l'ordinateur à l'aide de méthodes numériques et **en ce que** les images qui en résultent sont assemblées à l'aide de l'ordinateur.

3. Procédé selon la revendication 2, **caractérisé en ce que** les zones reproduites de façon nette sont déterminées par la formation numérique de la dérivée.

4. Procédé selon la revendication 1, 2 ou 3, **caractérisé en ce que** les paramètres pour l'enregistrement de la séquence de prises de vue individuelles sont prédéfinis par un ordinateur et **en ce que** le déroulement de l'enregistrement est contrôlé par cet ordinateur.

5. Procédé selon l'une quelconque des revendications précédentes, **caractérisé en ce que** l'enregistrement de la séquence de prises de vue individuelles est démarré automatiquement.

6. Procédé selon la revendication 5, **caractérisé en ce que** l'enregistrement de la séquence de prises de vue individuelles est démarré par une barrière photoélectrique.

7. Procédé selon l'une quelconque des revendications précédentes, **caractérisé en ce que** les prises de vue individuelles sont enregistrées à des intervalles de temps prédéfinis de façon fixe.

8. Procédé selon l'une quelconque des revendications précédentes, **caractérisé en ce que** les prises de vue individuelles sont enregistrées à des distances relatives entre la caméra et l'objet, qui sont prédéfinies de façon fixe.

9. Procédé selon l'une quelconque des revendications précédentes, **caractérisé en ce qu'**une caméra CCD est utilisée comme caméra pour l'enregistrement de la séquence de prises de vue individuelles.

10. Procédé selon l'une quelconque des revendications précédentes, **caractérisé en ce que** toutes les prises de vue individuelles de la séquence sont mémorisées d'abord sur l'ordinateur et **en ce que** les zones reproduites de façon nette sont déterminées à partir des prises de vue individuelles après la fin de l'enregistrement de la séquence.

11. Procédé selon l'une quelconque des revendications précédentes, **caractérisé en ce que**, à partir de chaque prise de vue individuelle de la séquence et juste après leur enregistrement, les zones nettes sont déterminées et insérées dans l'image finale.

12. Procédé selon l'une quelconque des revendications précédentes, **caractérisé en ce que** plusieurs images finales sont établies à partir de la séquence de prises de vue individuelles, les images finales représentant respectivement différentes zones de l'objet ou différentes caractéristiques.

13. Procédé selon l'une quelconque des revendications précédentes, **caractérisé en ce que** le plan d'image est subdivisé en plusieurs zones et **en ce que** les zones sont traitées en parallèle.

14. Procédé selon l'une quelconque des revendications précédentes, **caractérisé en ce qu'**il est utilisé pour la reconnaissance des caractéristiques d'un doigt.

15. Procédé selon l'une quelconque des revendications précédentes, **caractérisé en ce que** l'objet est éclairé par une source lumineuse.

16. Procédé selon la revendication 15, **caractérisé en ce qu'**on utilise une source lumineuse pulsée, qui est synchronisée avec la caméra.

17. Procédé selon la revendication 15 ou 16, **caractérisé en ce que** l'objet est éclairé par plusieurs sources lumineuses, présentant des plages de longueur d'ondes différentes, et dans différentes dispositions.

18. Procédé selon l'une quelconque des revendications 15 à 17, **caractérisé en ce que** l'objet est éclairé aussi longtemps qu'il se rapproche et s'éloigne de la caméra.

19. ' Procédé selon l'une quelconque des revendications 15 à 18, **caractérisé en ce que** seules les plages de l'objet se trouvant au point focal de la caméra sont éclairées.
